# EUROPEAN PATENT SPECIFICATION

(11) **EP 2 767 072 B1**
(45) Date of publication and mention of the grant of the patent: **16.09.2015**
(21) Application number: 12780685.9
(22) Date of filing: 11.10.2012
(51) Int. Cl.: H04L 29/08

(54) **A METHOD AND A SYSTEM TO PERFORM A DISTRIBUTED CONTENT ACQUISITION PROCESS FOR A CONTENT DELIVERY NETWORK**
VERFAHREN UND SYSTEM ZUR DURCHFÜHRUNG EINES VERFAHRENS FÜR VERTEILTE INHALTSERFASSUNG IN EINEM INHALTSAUSGABENETZWERK
PROCÉDÉ ET SYSTÈME DE MISE EN OEUVRE D'UN PROCESSUS D'ACQUISITION D'UN CONTENU DISTRIBUÉ CONÇU POUR UN RÉSEAU DE DIFFUSION DE CONTENU

(30) Priority: 13.10.2011 ES 201131644 P
(43) Date of publication of application: 20.08.2014
(73) Proprietor: Telefónica, S.A., 28013 Madrid (ES)
(72) Inventor: GARCIA MENDOZA, Armando Antonio, E-28013 Madrid (ES); RODRÍGUEZ RODRÍGUEZ, Pablo, E-28013 Madrid (ES); XIAOYUAN, Yang, E-28013 Madrid (ES)
(74) Representative: Carlos Hernando, Borja
(86) International application number: PCT/EP2012/070106
(87) International publication number: WO 2013/053785

(56) References cited:
- EP-A1- 2 187 594
- US-A1- 2002 078 174
- US-A1- 2002 143 798

## Description

### Field of the art

The present invention generally relates, in a first aspect, to a method to perform a distributed content acquisition process for a Content Delivery Network, said CDN comprising a plurality of server nodes, said content acquisition process being performed when an end-user requests uploading content, and more particularly to a method that comprises selecting at least one of said plurality of server nodes, directing said uploading request from said end-user to said at least one of said plurality of server nodes and uploading said content to said at least one of said plurality of server nodes upon acceptance of said uploading request by said at least one of said plurality of server nodes.

A second aspect of the invention relates to a system arranged to implement the method of the first aspect.

### Prior State of the Art

A CDN (Content Distribution Network) is a full geographically distributed system with objective to replicate contents to servers that are close to the end-users. All CDN system designs are based on the assumption that most contents in Internet are accessed multiple times once it produced. The implication of this assumption is that bandwidth requirement for content acquisition is considered be negligible compared to the one for the distribution. As consequence, all the current CDN systems [1] [2] [3] are optimized for content distribution rather than content acquisition.

With evolution of Web 2.0, the content consumption pattern has been traumatically changed. Current Internet users are not longer consumers of the content; they are actively participating in the entire chair of the content, from production and addiction to distribution and consume. Online UGC (user generated content) portals such as YouTube [1], allow users to upload the own videos, or modifications of previously downloaded videos, to share with other online users. Other web sites such as Megaupload [6] or RapidShare [7] are even more radicals. With these one-click hosting services [20], end-users can upload any content they want, from videos to DVD ISO files. According to report [2], 24 hours of raw video is being uploaded to YouTube per minute. In term of bandwidth, users around the world can be pushing content to YouTube servers with a rate of 1.4 Gbps.

Other characteristic of Web 2.0 is the speedup of information propagation process. The OSNs, such as Facebook [8] or Twitter [9] allows users to send notifications (tweets) to their direct-connected online friends (or follower in Twitter). The received information is then propagated to another thousand of friends of the friend. In an OSN, information or tweets can quickly be propagated to end-users as a cascade [21] [22]. The pandemic nature of OSNs incentives group of users to start simultaneously pushing information to the network, producing well-known phenomenon called flash-crowd.

The content production democratization and fast information propagation brings new challenges for current and next generation online services where the backend system has often to handle flash-crowds, driven by unpredictable end-user social interactions. There have been several measurement studies 00 to analyze online services, such as YouTube. In [3] authors even discussed the potential of P2P system to improve the video distribution, but the uploading process is still not considered.

CDNs typically operate as single global entities; have multiple points of presence and in locations that are geographically far apart. CDN used to have multiple replicas of each piece of content that is hosted for a CDN customer. The first copy (master copy) of the content, however, is only hosted in a single point, called the origin server. The origin server allows the CDN customers to upload the content that they are interested to distribute to the end-users. For this proposes, CDN providers normally define a standard API that facilitates the content publication. Some CDN providers [10] allocate a FTP space for each customer. Other CDN vendors deploy remote sync functionalities that allow CDN customers to mirror a server folder to the origin server. Typical CDN providers also implement the pull-based mechanisms. With pull-based mechanisms, the CDN customers do not publish the content to the CDN. The CDN is on charge to bring all contents from predefined servers when are being requested by the end-users.

A part of the content publication mechanism, CDN can only differentiate by a set of other characteristics, such as node selection or node allocation strategy. For example, in [11] it is used a hierarchy of DNS [12] servers together with geo-location information to find the content server that is closest to a requesting end-user to serve content. Other solutions [13] use HTTP redirection mechanism to implement node selection. Solutions like [14] rely on a small number of large datacenters rather than a large number of small datacenters connected by a well-provisioned private network [11]. Further, [16] relies on extensive storage and caching infrastructure at the major peering points to reduce the bandwidth cost. Amazon [15] provides CDN service using Amazon Cloud Front [17] together with its simple storage service allowing end-users to get data from various edge locations of the Internet that Amazon peers with.

Regardless of the content publication mechanism and other architecture characteristics, the current CDN designs are all based on a centralized origin server to handle the master copy of the customer content.

A centralized architecture can only handle a limited number of parallel acquisition processes and it is constrained by different system resources, including network bandwidth, memory size, CPU capacity and disk read/write throughput.

### - Scaling constrains

The common practice to scale the data acquisition service is replicating server nodes inside the datacenter. This technique, however, is not always possible due to the space limitations and power constrains. For instance, some rack vendors offer a limited number of slots for CPU/storage elements. Scaling inside the datacenter is neither cost-effective because the non-linearity of the cost of the cooling system. For large datacenters, the cooling system has to provide lower temperature to overcome the recirculation effects of the higher temporal equipment exhaust air [18]. Furthermore, up to 30% of extra cooling power can be required to supply a constant humidity level to all the IT elements.

### - Low-level resource utilization

In current CDN systems, data acquisition and data delivery are isolated services and are allocated in independent machines, resulting in substantial system resource inefficiency related with node inactivity. Depending on workload characteristics, the current server nodes may only need 10-20% of CPU resource to full saturate the network link. The 80-90% of remaining resources is just wasted and could be utilized by CPU intensive operations such as video post-processing for user uploaded contents.

Determined by human behavior of different time zones, CDN nodes experience high demands during only a certain period of day. In order to manage the diurnal network demand, CDN nodes are normally over-provisioning and, as consequence, suffer low-level utilization across time.

### - Low uploading performance

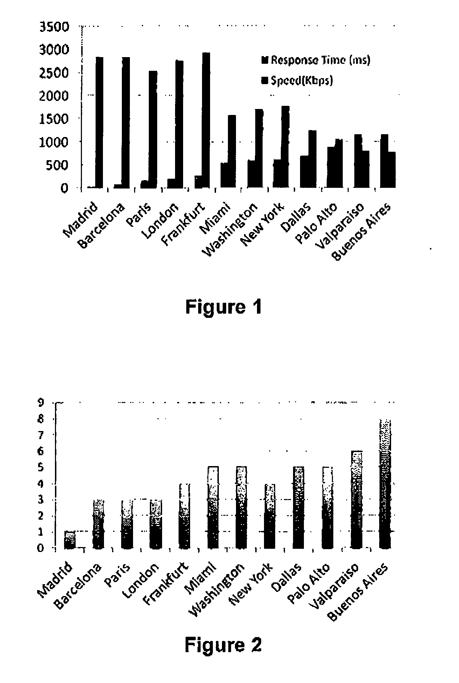

Uploading content to a single centralized point can suffer from high latency and low throughput. Figure 1 will show the result of a performance study with 40 servers distributed in 12 cities around the world. In the study, each server uploads images to a centralized server in Madrid in a period of 48 hours. Both latency and upload speed are measured. As seen, the upload speed is inversely proportional to the network latency. It is possible to clearly identify 3 zones: 1) European cities with highest performance, 2) North American cities and 3) cities in South America with lowest performance. Compared with European cities, the upload speed of nodes in South America is 60% lower.

### - High network cost

Having a centralized acquisition point involves longer transmission paths and consumes more network resources. Figure 2 will show the number of network hops between servers in different cities to Madrid. The longest path is between Buenos Aires to Madrid that requires up to 8 hops. Longer path transmission is not efficient and is also unfriendly for network providers (ISP) that are paying upload/download bandwidths to/from transit network providers. Uploading to local server nodes, in same pop as end-user or CDN customer, is much more efficient and reduces network traffic in many links.

An existing patent application in the field is US 2002143798 (A1) "Highly available distributed storage system for internet content with storage site redirection" which also discloses a mechanism for content storage. On contrary of the present invention, the content provider uploads the content to a given storage site selected from a set of storage sites by resolving a first type of URL via a traffic management system that takes into consideration only network traffic conditions and server load, it does not consider the location of the end user to select the best delivery node for the acquisition process.

### Description of the Invention

It is necessary to offer an alternative to the state of the art which covers the gaps found therein, particularly related to the lack of proposals which really offer a distributed architecture with a scalable content acquisition mechanism and which really allow reducing the replication cost of uploaded contents to other delivery nodes.

To that end, the present invention provides, in a first aspect, a method to to perform a distributed content acquisition process for a Content Delivery Network, said Content Delivery Network, or CDN, comprising a plurality of server nodes, said content acquisition process being performed when an end-user requests uploading content.

On contrary to the known proposals, the method of the invention, in a characteristic manner it further comprises:
- selecting, a central entity receiving an uploading request from said end-user, at least one of said plurality of server nodes according to location of said end user, current status of said plurality of server nodes, CPU requirements of said plurality of server nodes and/or any other monitoring parameter of said CDN;
- directing, said central entity, said uploading request from said end-user to said at least one of said plurality of server nodes; and
- uploading, said end-user, said content to said at least one of said plurality of server nodes upon acceptance of said uploading request by said at least one of said plurality of server nodes.

Other embodiments of the method of the first aspect of the invention are described according to appended claims 2 to 8, and in a subsequent section related to the detailed description of several embodiments.

A second aspect of the present invention concerns to a system to perform a distributed content acquisition process for a Content Delivery Network, said Content Delivery Network, or CDN, comprising a plurality of server nodes, said content acquisition process being performed when an end-user requests uploading content.

In the system of the second aspect of the invention, on contrary to the known systems mentioned in the prior state of the art section, and in a characteristic manner it comprises a central controller in charge of:
- selecting, when receiving an uploading request from said end-user, at least one of said plurality of server nodes according to location of said end user, current status of said plurality of server nodes, CPU requirements of said plurality of server nodes and/or any other monitoring parameter of said CDN; and
- directing, said central entity, said uploading request of said end-user to said at least one of said plurality of server nodes;
wherein said end-user uploades said content to said at least one of said plurality of server nodes upon acceptance of said uploading request by said at least one of said plurality of server nodes.

The system of the second aspect of the invention is adapted to implement the method of the first aspect.

Other embodiments of the system of the second aspect of the invention are described according to appended claims 10 to 21, and in a subsequent section related to the detailed description of several embodiments.

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 shows the result of latency and upload speed of a performance study with 40 servers distributed in 12 cities around the world.
Figure 2 shows the number of hops between servers to reach the server placed in Madrid, according to the performance study.
Figure 3 shows the Acquisition Node, according to an embodiment of the present invention.
Figure 4 shows the Central Controller, according to an embodiment of the present invention.
Figure 5 shows graphically the upload throughput of European countries versus upload throughput of all the world, according to an implementation of the present invention.
Figure 6 shows the CPU load for a video post-processing, according to an implementation of the present invention.

### Detailed Description of Several Embodiments

The invention is about a distributed content acquisition system for CDN. In this system, all delivery nodes of a CDN are coordinated to allow any particular end-user (home user as well as CDN customers) to upload content to the node storage. The uploaded content is then post-processed and propagated to other delivery nodes.

All delivery nodes report load state to a centralized controller. According to the state of delivery nodes, geolocation of the uploader and CPU requirement for post-processing, the controller selects the best delivery node for the acquisition process.

A replication process follows the acquisition process, where the delivery node sends the acquired content to a centralized repository. The centralized repository guarantees the availability of content and performs all the control policy, such as access right control or content available period.

The distributed acquisition system is composed by 2 main elements: Acquisition Nodes and Central Controller.

### - Acquisition Node

An acquisition node (AN) is composed by a set of software elements that can run both in same physical delivery nodes as well as independent machines. The seamless integration of acquisition with delivery nodes provides deployment advantages and high resource utilization.

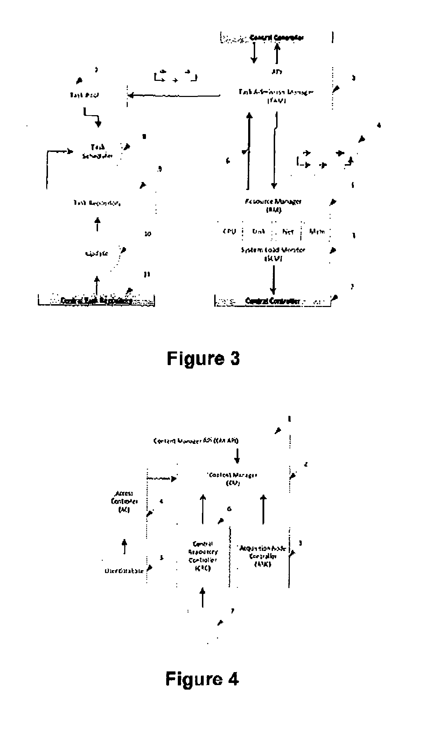

In Figure 3 they were shown all components of an acquisition node:
(1) System load monitor (SLM): this component constantly tracks resource consumption level of the node by using different monitors that calculate the load level of CPU, disk, network and memory. Using real-time load levels, the SLM calculates the current and near future load level. The system load is then, periodically, reported to the central controller (2).
(3) Task admission Manager (TAM): the central controller communicates with this component whenever a new acquisition process is requested. The admission manager interprets a set of predefined requests and discomposes each request in tasks. Each of these tasks requires a set of resources (CPU, disk, memory, network) and all of them are linked to form the task graph (4).
(4) Task graph: is defined by a DAG (Directed Acyclic Graph) that defines dependences and result flow between tasks. A typical acquisition process is composed by 7 tasks: 1) access control, 2) disk allocation, 3) network resource allocation, 4) uploading process, 5) CPU resource allocation 6) post-processing, and 7) content replication to central repository. With DAG, different tasks can be specified to be run in parallel. For instance, task 1), 2) and 3) can be forked in same time in this case.
(5) Resource Manager: each task is associated with resource requirements. This module is on charge to verify that all tasks can be performed correctly taking into account the current system load. If resource requirement is satisfied, this module will send the acceptance answer (6) back to task admission manager.
(7) Task Pool: once the acquisition request is accepted, the task admission manager sends the set of tasks to this module.
(8) Task scheduler: taking the list of tasks in the task pool, this module performs the scheduling according to the task dependences (specified in DAG) and timestamps associated with tasks. The scheduler is on charge to interact with network, memory and CPU to execute all tasks from the task pool.
(9) Task repository: all possible tasks are pre-defined in this module. Only tasks in this repository are allowed. The task repository performs periodical update processes (10) that download new set of predefined tasks from a central task repository, 11.

### - Central Controller

The central controller (CC) is the key component that coordinates all the acquisition process. This component is structured in 6 sub elements, as shown in Figure 4:
(1) Content manager API (CM-API): the end-users interact with CC through this element. It provides a set of API functions to manager the content of all users, including creation of a new content and delete of a exist content.
(2) Content Manager (CM): this is the core element of CC and manages the metainfomation related with all contents. When an end-user requests an acquisition process, the CM-API (1) starts a new task in CM. The CM is on charge to validate the access right of the end-user and request available acquisition nodes (ANs) from acquisition node controller (3). Once AN is selected, CM interact with the AN to start the acquisition process.
(3) Acquisition Node Controller (ANC): all acquisition nodes (AN) report to this element. For each AN, ANC knows the current state, the near future load prediction, the ongoing acquisition processes and acquired contents. ANC also provides node selection policy. Bases on geolocation of the end-user and load state of ANs, the policy select the closest node with lowest load.
(4) Access Controller (AC): all access right of CDN users are controlled by this element. For each end-user, this element defines the access right, the maximum storage capacity and the maximum number of parallel upload processes. All the metainformation is stored in the user database (5).
(6) Central Repository Controller (CRC): this element tracks all acquired content in the central repository (7). Given an end-user, this element knows the list of uploaded content. It also provides interface for ANC to replicate the content in the central repository. When an AN decides to replicate the content, it interacts with ANC which notifies the CRC to start a new replication process. Once the CNC allocates the storage space, the replication can be started.

The invention has been implemented in the top of the Telefonica CDN solution. The Telefonica CDN solution is a P2P solution where delivery nodes (endpoints) are organized in logical sites. All nodes in the same site can exchange content by P2P communications.

Nodes report load statistics to a centralized element called tracker. The tracker contains information of nodes in real time and guides the DNS to select the correct endpoint, given an end-user request.

The DNS system in Telefonica CDN is structured in concept of business units (BU). Each business unit has own DNS and the DNSs of all BUs are interconnected by a top-level DNS (TLD). Based on geolocation of end-user, the TLD forward the DNS resolution request to a local BU's DNS. Each BU's DNS talks with a tracker that has load statistics of all nodes that the tracker is on charge of.

The central repository for all contents of the CDN is called the Origin Server. All uploaded content is allocated in this central repository. All endpoints contact with this central repository to get first copy of the requested content.

Acquisition node runs together with CDN endpoints and share all the resources for delivery and acquisition process. An independ directory is managed by the acquisition node, however, the storage space is shared. A file is uploaded, first, to the independent space, and then it is post-processed. The result file of post-processing is then moved to the delivery node space and a replication process is started to replica the file to the origin server. Once the file is replicated, it will be removed by the acquisition node.

Other implementation details are the following:
1. Each of endpoints in the Telefonica CDN runs an instance of acquisition node. The acquisition node (AN) calls a REST API of the endpoint software to get statistics of the node and build the resource availability metrics. The REST API is defines as:
   Syntax: GET /anapi/v1/nodestats
   Result: 200 OK:

      ```
{
                 cpu: 50,
                 totalnetworkcapacityMBPS: 50,
                 availnetworkcapacityMBPS: 50,
                 totaldiskcapacityMB: 100000
                 availcapacityMB: 40000
       }
```
   Each AN calls the API every 30 seconds and calculate the system load by a moving average. The calculated load level is sent back to the Central Control every 5 minutes.
2. Task admission manager of the AN export a REST API that define all operations that an AN can performs. The most important API call is /anapi/v1/newacquisition that activates an acquisition process. Different parameters are passed one the call:
   - Control Token: only end-users with a valid token can upload content to this node. The token is associated with a timestamp and it is valid for only 10 minutes. The token is also used to form the URL for acquisition operation. An end-user can do HTTP POST against http://NODE_IP:PORT/token to upload the content.
   - Bucket id: in Telefonica CDN, all files are organized in logical buckets.
   - File name: the output file name.
   - File size: the expected file size.
   - Post-process Operation DAG: all post-process operations are associated with unique Ids and are linked in the DAG.
   - The result of the call could be 200, so the node accepts the acquisition process. Or it returns code 400, in other way.
3. Task repository: this module is implemented on the top of the Telefonica CDN software repository. Each 30 minutes, a cron job is activated to download a text file that contains all RPM packets that has to be downloaded. Each task is associated with a unique ID that can be used to define the post-process operations.
4. Resource manager: current implementation is hard threshold based. For each task, CPU, disk, memory and network requirement is defined. The requirement can be a constant or a function call. For instance, the disk requirement for a video is calculated as VideoSize * (1+1/R), where R is the estimated compression factor for a given encoder. If the resource requirement of any task is not satisfied, the acquisition process will be rejected.
5. Task scheduler: current implementation is just a timestamp-based scheduler based one soft real-time schedulers, specifically it is an Earliest Deadline First (EDF) algorithm.

Central controller runs inside the Origin Server and share all resources in same way as the acquisition nodes do with the endpoints. The central controller has following implementation details:
1. Node Selection: the mechanism following 3 steps to select an acquisition node:
   - Select all nodes with load level less than a threshold (60%, currently).
   - Sort the nodes according to the virtual distance between end-user and node.
   - Select first N nodes as candidates (N=3, currently).
   - Contact, in parallel, with N nodes to start the acquisition process.
   - The first node that accepts the request will be the selected node. The other N-1 nodes will be discarded by canceling the request.

   The virtual distance is provided by the Telefonica CDN and defines a number given any pair of IP address. The distance is calculated taking into account the network topology, network saturation and operational cost. For instance a transoceanic link will have higher cost than a link inside the country, even the capacity of transoceanic link is much higher.
2. Access control: the user access right control is implemented in the top of existing infrastructure. Files in Telefonica CDN are divided in buckets. An end-user may have access right to multiple buckets and a bucket can contain multiple files.
3. Acquisition node controller: this module is implemented as a service in the Origin Server and provides a REST API for node state reports. It has been implemented by using django framework [19].

### Advantages of the invention

The distributed acquisition system proposed in this invention has several advantages, including high upload throughput, high resource utilization, fault tolerance and low network cost.

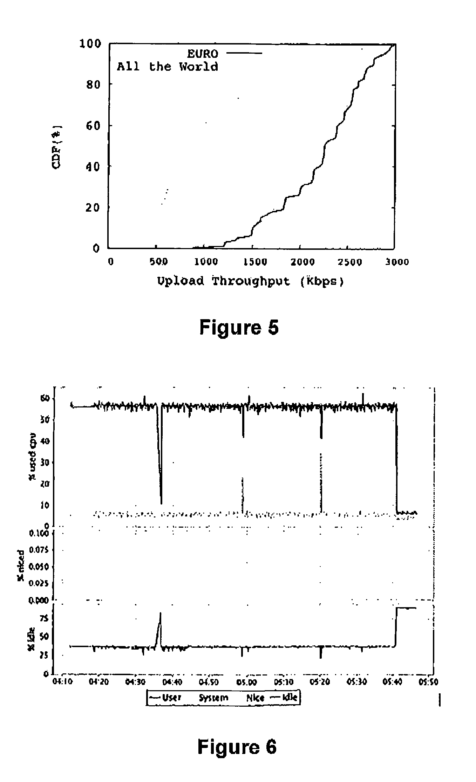

The central controller is able to direct the end-user request to a server node geographically close-by with low latency. The lower latency can potentially increase the TCP throughput and improve the overall QoS. Figure 5 showed the CDF distribution of upload speed of European end-users and of all end-users around the world to a node in Madrid. Results suggest that the average upload throughput can potentially be improved by 281% with the distributed acquisition system.

In the proposed architecture, the acquisition coexists with delivery service in the same physical nodes, enabling resource sharing and improving the node utilization. Figure 6 showed the CPU requirement of post-processing process of an uploaded video in a dual-core server. In this case, the original uploaded video is encoded by XVID codec with an average rate of 1106.5 kbps. The length of video is 98 minutes. The audio stream is coded with mp3 with average rate of 128kbitps. The uploaded video is encoded to 3 bitrates: 1000 kbps, 750 kbps and 500 kbps. The video codec is H264 while audio is always encoded as mp3 with target bitrate of 96 kbps, using codec mp3lame. The post-processing process starts at 4:35 and finishes at 5:40; total time is 65 minutes. The transcoder full saturate 1 CPU and consume 50% of resources. Surprisingly, the codec is able to produce same frame rate in each quality and requires a constant time (21 minutes) to produce one video.

The current Telefonica CDN nodes are based on 8 cores CPUs with load level less than 20% in 90% of time. Taking into account these numbers and the transcoding CPU requirement, it is possible to predict that each delivery node has wasted resource to transcode one video per 3.8 Minutes. With 20 nodes around the world, the distributed acquisition system can potential post-process one video every 12 seconds.

Other advantage of the proposal is fault tolerance capability of the acquisition service. The central controller has a global view of all acquisition nodes. Once a failure is detected, new incoming upload request can be redirected to other nodes, although the selected node may not be the optimal in term of network cost. The central controller is the unique component that cannot be replaced without resource replication. The current replication mechanism of Telefonica CDN for origin is leveraged to implement fault tolerance of the central controller. Specifically, the central controller is replicated in two existent servers with a synchronized backend. The two servers are dynamically selected by a balancer that hides the complexity of the controller.

A person skilled in the art could introduce changes and modifications in the embodiments described without departing from the scope of the invention as it is defined in the attached claims.

### ACRONYMS

- AN: Acquisition Node
- CC: Central Controller
- CDN: Content Distribution Network
- CDF: Cumulative Distribution Function
- DAG: Directed Acyclic Graph
- ISP: Internet Service Provider
- OSN: Online Social Network
- POP: Point of Presence
- QoS: Quality of Service
- UGC: User Generated Content

### REFERENCES

[1] YouTube: http://www.youtube.com
[2] YouTube traffic: http://www.website-monitoring.com/blog/2010/05/17/YouTube-facts-and-figures-history-statistics/
[3] Alan Mislove, Massimiliano Marcon, Krishna P. Gummadi, Peter Druschel, and Bobby Bhattacharjee. Measurement and analysis of online social networks. In Proceedings of the 7th ACM SIGCOMM conference on Internet measurement (IMC '07). ACM, New York, NY, USA, 29-42.
[4] Phillipa Gill, Martin Arlitt, Zongpeng Li, and Anirban Mahanti. 2007. YouTube traffic characterization: a view from the edge. In Proceedings of the 7th ACM SIGCOMM conference on Internet measurement (IMC'07). ACM, New York, NY, USA, 15-28.
[5] M. Cha, H. Kwak, P. Rodriguez, Yong-Yeol Ahn, and S. Moon, I tube, you tube, everybody tubes: analyzing the world's largest user generated content video system. In Proceedings of the 7th ACM SIGCOMM conference on Internet measurement (IMC '07). ACM, New York, NY, USA, 1-14.
[6] Megaupload: http://www.megaupload.com/
[7] RapidShare: https://www.rapidshare.com/
[8] Facebook: http://www.facebook.com/
[9] Twitter: http://twitter.com/
[10] Telefonica CDN: http://test.cdn.telefonica.com/demo.html
[11] Akamai: http://akamai.com/
[12] RFC 1035, Domain Names - Implementation and Specification, P. Mockapetris, The Internet Society (November 1987)
[13] ALU CDN: http://www.velocix.com/
[14] Limelight CDN: www.limelightnetworks.com/
[15] Amazon: www.amazon.com
[16] YouTube system architecture: http://video.google.com/videoplay?docid=-6304964351441328559#
[17] Amazon CloudFront: http://aws.amazon.com/cloudfront/
[18] Cooling System for Data centers: http://www.lamdahellix.com/%SCUserFiles%SCFile%SCdownloads%5C25_whitepaper. pdf
[19] Django Project: https://www.djangoproject.com/
[20] Demetris Antoniades, Evangelos P. Markatos, and Constantine Dovrolis. 2009. One-click hosting services: a file-sharing hideout. In Proceedings of the 9th ACM SIGCOMM conference on Internet measurement conference (IMC '09). ACM, New York, NY, USA, 223-234.
[21] Fabricio Benevenuto, Tiago Rodrigues, Meeyoung Cha, and Virgilio Almeida, Characterizing User Behavior in Online Social Networks In Proc. of Usenix/ACM SIGCOMM Internet Measurement Conference (IMC), November 2009
[22] Haewoon Kwak, Changhyun Lee, Hosung Park, and Sue Moon, What is Twitter, a Social Network or a News Media? The 19th international conference on World wide web (WWW), 2010.

## Claims

1. A method to perform a distributed content acquisition process for a Content Delivery Network, said Content Delivery Network, or CDN, comprising a plurality of server nodes, said content acquisition process being performed when an end-user requests uploading content, the method comprising:
- selecting, by a central entity receiving an uploading request from said end-user, at least one of said plurality of server nodes according to current status of said plurality of server nodes and/or CPU requirements of said plurality of server nodes;
- directing, by said central entity, said uploading request from said end-user to said at least one of said plurality of server nodes; and
- uploading, by said end-user, said content to said at least one of said plurality of server nodes upon acceptance of said uploading request by said at least one of said plurality of server nodes,
**characterised in that** it further comprises selecting said at least one of said plurality of server nodes according to location of said end user.

2. A method as per claim 1, comprising post-processing, said at least one of said plurality of server nodes, said content and propagating said content, once uploaded, to other or others of said plurality of server nodes.

3. A method as per claim 1 or 2, comprising sending said content, once uploaded, from said at least one of said plurality of server nodes to a central repository of said central entity.

4. A method as per claim 1, 2 or 3, comprising performing, by said central entity, control policy of said content and/or checking of access rights, maximum storage capacity and maximum number of parallel distributed content acquisition processes of said end-user.

5. A method as per any of previous claims, comprising calculating current and future resource consumption, load level of CPU, load level of disk, load level of network and load level memory of at least part of said plurality of server nodes by monitoring means placed in each corresponding server node and sending said calculations to said central entity.

6. A method as per claim 3, comprising, by said at least one of said plurality of server nodes, discomposing said uploading request received from said central entity in a set of tasks, said set of tasks being at least one of the following non closed list:
access control, disk allocation, network resource allocation, uploading process, CPU resource allocation, post-processing and content replication to said central repository.

7. A method as per claim 6, comprising defining said set of tasks according to a Directed Acyclic Graph.

8. A method as per claim 7, comprising accepting, by said at least one of said server nodes, said uploading request received from said central entity if resource requierements associated to said set of tasks can be satisfied by curent available resources in said at least one of said server nodes.

9. A system to perform a distributed content acquisition process for a Content Delivery Network, said Content Delivery Network, or CDN, comprising a plurality of server nodes, said content acquisition process being performed when an end-user requests uploading content, comprising a central controller adapted to:
- select, when receiving an uploading request from said end-user, at least one of said plurality of server nodes according to, current status of said plurality of server nodes and/or CPU requirements of said plurality of server nodes; and
directing by said central entity, said uploading request of said end-user to said at least one of said plurality of server nodes;
wherein said end-user uploades said content to said at least one of said plurality of server nodes upon acceptance of said uploading request by said at least one of said plurality of server nodes,
**characterised in that** said central controller is further adapted to select said at least one plurality of server nodes according to location of said end user.

10. A system as per claim 9, wherein each of said plurality of server nodes comprises a system load monitor that calculates current and future load level of resources related to corresponding server node, and sends said caculations to said central controller, said resources being at least one of the following non closed list: CPU, disk, network and memory.

11. A system as per claim 10, wherein each of said plurality of server nodes comprises a task admission manager adapted to receive said uploading request from said central controller and discomposing said uploading request in a set of tasks, said set of tasks comprising the use of resources related to corresponding server node and said tasks being at least one of the following non closed list: access control, disk allocation, network resource allocation, uploading process, CPU resource allocation, post-processing and content replication to said central controller.

12. A system as per claim 11, wherein each of said plurality of server nodes comprises a resource manager adapted to verify that said set of tasks can be carried out according to curent available resources in said at least one of said server nodes and accepting said uploading request after said verification.

13. A system as per claim 12, wherein each of said plurality of server nodes comprises a task pool wherein said task admission manager sends said set of tasks upon said acceptance of said uploading request.

14. A system as per claim 13, wherein each of said plurality of server nodes comprises a task scheduler adapted to execute said set of tasks from said task pool according to a Directed Acyclic Graph and timestamps associated to said set of tasks.

15. A system as per claim 14, wherein each of said plurality of server nodes comprises a task repository wherein all possible tasks are defined, said all possible tasks being uploaded from a central task repository in said central controller.

16. A system as per any of previous claims 9 to 15, wherein said central controller comprises a content manager Application Programming Interface that allows said end-user to interact with said central controller by providing a set of functions.

17. A system as per claim 16, wherein said central controller comprises an acquisition node controller wherein said plurality of server nodes send said calculations, said acquistion node having at least part of the following information of each of said plurality of server nodes: current state, future load prediction, ongoing acquisition processes and acquired contents.

18. A system as per claim 17, wherein said central controller comprises a content manager adapted to validate access rights of said end-user and performing said selection of said at least one of said plurality of server nodes according to information provided by said acquisition node controller.

19. A system as per claim 18, wherein said central controller comprises an access controller wherein said access rights, maximum storage capacity and maximum number of parallel upload processes are defined for said end-user and stored in a user database.

20. A system as per claim 19, wherein said central controller comprises a central repository controller wherein uploaded content in each of said plurality of server nodes is stored.

21. A system as per any of previous claims, wherein said distributed content acquisition process coexists with a distributed content delivery process in said plurality of server nodes.

## Patentansprüche

1. Verfahren zur Durchführung eines verteilten Inhalte-Erfassungsprozesses für ein Content Delivery Network, das Content Delivery Network, oder CDN, eine Vielzahl von Serverknoten umfassend, wobei der Inhalts-Erfassungsprozess durchgeführt wird, wenn ein Endbenutzer das Hochladen von Inhalten anfordert, das Verfahren umfassend:
- Auswählen zumindest eines der Vielzahl von Serverknoten entsprechend dem aktuellen Status der Vielzahl von Serverknoten und/oder CPU-Anforderungen dieser Vielzahl von Serverknoten mittels einer zentralen Einheit, die eine Hochlade-Anforderung von dem Endbenutzer empfängt;
- Leiten der Hochlade-Anforderung von dem Endbenutzer zu dem zumindest einen der Vielzahl von Serverknoten mittels der zentralen Einheit; und
- Hochladen der Inhalte auf den zumindest einen der Vielzahl von Serverknoten nach Annahme der Hochlade-Anforderung durch den zumindest einen der Vielzahl von Serverknoten, durch den Endbenutzer,
**dadurch gekennzeichnet, dass** es weiterhin das Auswählen des zumindest einen dieser Vielzahl von Serverknoten entsprechend dem Standort des Endbenutzers, umfasst.

2. Verfahren nach Anspruch 1, die Nachbearbeitung dieses Inhaltes durch den zumindest einen diseser Vielzahl von Serverknoten und die Übertragung dieses Inhaltes, sobald hochgeladen, an einen anderen oder andere der Vielzahl von Serverknoten umfassend.

3. Verfahren nach Anspruch 1 oder 2, das Senden des Inhaltes, sobald hochgeladen, von dem zumindest einen der Vielzahl von Serverknoten zu einem Zentralspeicher der zentralen Einheit umfassend.

4. Verfahren nach Anspruch 1, 2 oder 3, das Durchführen einer Kontrollregelung des Inhalts und/oder einer Überprüfung von Zugangsrechten, maximaler Speicherkapazität und maximaler Anzahl an parallelen verteilten Inhalte-Erfassungsprozessen dieses Endbenutzers mittels der zentralen Einheit umfassend.

5. Verfahren nach einem der vorhergehenden Ansprüche, das Berechnen von aktuellem und zukünftigem Ressourcenverbrauch, CPU-Auslastung, Platten-Auslastung, Netzwerkauslastung und Speicherauslastung von zumindest einem Teil der Vielzahl von Serverknoten mittels Überwachungsmittel, die in jedem entsprechenden Serverknoten angeordnet sind, und das Senden der Berechnungen an die zentrale Einheit umfassend.

6. Verfahren nach Anspruch 3, das Zersetzen der von der zentralen Einheit erhaltenen Hochlade-Anforderung in eine Reihe Tasks mittels des zumindest einen der Vielzahl von Serverknoten umfassend, wobei die Reihe Tasks zumindest eine der folgenden nicht geschlossenen Listen ist: Zugangskontrolle, Plattenzuteilung, Netzwerkressourcenzuteilung, Hochladeprozess, CPU-Ressourcenzuteilung, Nachbearbeitung und Inhaltsreproduktion an den Zentralspeicher.

7. Verfahren nach Anspruch 6, das Definieren der Reihe Tasks entsprechend einem gerichteten azyklischen Graphen umfassend.

8. Verfahren nach Anspruch 7, das Akzeptieren der von der zentralen Einheit empfangenen Hochlade-Anforderung durch den zumindest einen der Serverknoten, wenn die im Zusammenhang mit der Reihe Tasks Ressourcen-Anforderungen durch die aktuellen verfügbaren Ressourcen in dem zumindest einen der Serverknoten erfüllt werden können, umfassend.

9. System zur Durchführung eines verteilten Inhalte-Erfassungsprozesses für ein Content Delivery Network, das Content Delivery Network, oder CDN, eine Vielzahl von Serverknoten umfassend, wobei der Inhalts-Erfassungsprozess durchgeführt wird, wenn ein Endbenutzer das Hochladen von Inhalten anfordert, einen zentralen Regler umfassend eingerichtet zum:
- Auswählen zumindest eines der Vielzahl von Serverknoten, entsprechend dem aktuellen Status der Vielzahl von Serverknoten und/oder CPU-Anforderungen dieser Vielzahl von Serverknoten, beim Empfangen einer Hochlade-Anforderung von dem Endbenutzer;
- Leiten der Hochlade-Anforderung von dem Endbenutzer zu dem zumindest einen der Vielzahl von den Serverknoten mittels der zentralen Einheit;
wobei der Endbenutzer den Inhalt auf den zumindest einen der Vielzahl von Serverknoten nach Annahme der Hochlade-Anforderung mittels des zumindest einen der Vielzahl von Serverknoten hochlädt,
**dadurch gekennzeichnet, dass** der zentrale Regler weiterhin dafür eingerichtet ist, um den zumindest einen dieser Vielzahl von Serverknoten entsprechend dem Standort des Endbenutzers auszuwählen.

10. System nach Anspruch 9, wobei jeder der Vielzahl von Serverknoten einen Systemauslastungsmonitor, der die aktuelle und zukünftige Auslastung von Ressourcen im Zusammenhang mit dem entsprechenden Serverknoten berechnet und die Berechnungen an den zentralen Regler sendet, umfasst, wobei die Ressourcen zumindest eine der folgenden nicht geschlossenen Listen sind: CPU, Platte, Netzwerk und Speicher.

11. System nach Anspruch 10, wobei jeder der Vielzahl von Serverknoten einen Task-Aufnahmemanager für den Empfang der Hochlade-Anforderung von dem zentralen Regler und für die Zersetzung der Hochlade-Anforderung in eine Reihe Tasks eingerichtet, umfasst, wobei die Reihe Tasks die Verwendung von Ressourcen im Zusammenhang mit entsprechenden Serverknoten umfasst, und die Tasks zumindest eine der folgenden nicht geschlossenen Listen sind: Zugangskontrolle, Plattenzuteilung, Netzwerkressourcenzuteilung, Hochladeprozess, CPU-Ressourcenzuteilung, Nachbearbeitung und Inhaltsreproduktion an den Zentralspeicher.

12. System nach Anspruch 11, wobei jeder der Vielzahl von Serverknoten einen Ressourcenmanager für die Verifizierung der Durchführbarkeit der Reihe Tasks entsprechend aktuellen verfügbaren Ressourcen in dem zumindest einen der Serverknoten eingerichtet, umfasst, und wobei die Hochlade-Anforderung nach der Verifizierung akzeptiert wird.

13. System nach Anspruch 12, wobei jeder der Vielzahl von Serverknoten einen Taskpool umfasst, wobei der Task-Aufnahmemanager die Reihe Tasks bei Annahme der Hochlade-Anfrage sendet.

14. System nach Anspruch 13, wobei jeder der Vielzahl von Serverknoten einen Taskplaner für die Ausführung der Reihe Tasks von dem Taskpool entsprechend einem gerichteten azyklischen Graphen eingerichtet, und Zeitstempel im Zusammenhang mit der Reihe Tasks, umfasst.

15. System nach Anspruch 14, wobei jeder der Vielzahl von Serverknoten einen Taskspeicher, in dem sämtliche mögliche Tasks definiert sind, umfasst, wobei sämtliche mögliche Tasks von einem zentralen Taskspeicher auf den zentralen Regler hochgeladen werden.

16. System nach einem der vorhergehenden Ansprüche 9 bis 15, wobei der zentrale Regler eine Inhaltsmanager-Programmierschnittstelle, die es dem Endbenutzer ermöglicht, mit dem zentralen Regler zu interagieren, indem eine Reihe Funktionen bereitgestellt werden, umfasst.

17. System nach Anspruch 16, wobei der zentrale Regler einen Erfassungsknoten-Regler umfasst, wobei die Vielzahl von Serverknoten die Berechnungen senden, der Erfassungsknoten zumindest einen Teil der folgenden Information jedes der Vielzahl von Serverknoten aufweisend: aktueller Status, zukünftige Auslastungsvorhersage, laufende Erfassungsprozesse und erworbene Inhalte.

18. System nach Anspruch 17, wobei der zentrale Regler einen Inhaltsmanager für die Validierung der Zugangsrechte des Endbenutzers und die Ausführung der Auswahl des zumindest einen aus der Vielzahl von Serverknoten entsprechend der durch den Erfassungsknoten-Regler zur Verfügung gestellten Information eingerichtet, umfasst.

19. System nach Anspruch 18, wobei der zentrale Regler einen Zugangsregler umfasst, wobei die Zugangsrechte, die maximale Speicherkapazität und die maximale Anzahl der parallelen Hochladeprozesse für den Endbenutzer definiert und in einer Benutzerdatenbank gespeichert werden.

20. System nach Anspruch 19, wobei der zentrale Regler einen Zentralspeicherregler umfasst, wobei der hochgeladene Inhalt in jedem der Vielzahl von Serverknoten gespeichert ist.

21. System nach einem der vorhergehenden Ansprüche, wobei der verteilte Inhalte-Erfassungsprozess mit einem verteilten Inhalte-Auslieferungsprozess in der Vielzahl von Serverknoten koexistiert.

## Revendications

1. Procédé pour la mise en oeuvre d'un processus d'acquisition de contenu distribué pour un Réseau de Diffusion de Contenu, ledit Réseau de Diffusion de Contenu, ou CDN, comprenant une pluralité de noeuds de serveur, ledit processus d'acquisition de contenu étant mis en oeuvre lorsqu'un utilisateur final demande le téléchargement de contenu, le procédé comprenant :
- la sélection, par une entité centrale recevant une demande de téléchargement depuis ledit utilisateur final, d'au moins un de ladite pluralité de noeuds de serveur en fonction du statut actuel de ladite pluralité de noeuds de serveur et/ou des exigences de CPU de ladite pluralité de noeuds de serveur ;
- la direction, par ladite entité centrale, de ladite demande de téléchargement depuis ledit utilisateur final audit au moins un de ladite pluralité de noeuds de serveur ; et
- le téléchargement, par ledit utilisateur final, dudit contenu audit au moins un de ladite pluralité de noeuds de serveur sur acceptation de ladite demande de téléchargement par ledit au moins un de ladite pluralité de noeuds de serveur,
**caractérisé en ce qu'**il comprend en outre la sélection dudit au moins un de ladite pluralité de noeuds de serveur en fonction de la localisation dudit utilisateur final.

2. Procédé selon la revendication 1, comprenant le traitement postérieur, dudit au moins un de ladite pluralité de noeuds de serveur, dudit contenu et la propagation dudit contenu, une fois téléchargé, à un autre ou à d'autres de ladite pluralité de noeuds de serveur.

3. Procédé selon la revendication 1 ou 2, comprenant l'envoi dudit contenu, une fois téléchargé, depuis ledit au moins un de ladite pluralité de noeuds de serveur à un dépositaire central de ladite entité centrale.

4. Procédé selon la revendication 1, 2 ou 3, comprenant la mise en oeuvre, par ladite entité centrale, de la politique de contrôle dudit contenu et/ou la vérification des droits d'accès, de la capacité de stockage maximale et du nombre maximal de processus d'acquisition de contenu distribué parallèles dudit utilisateur final.

5. Procédé selon l'une quelconque des revendications précédentes, comprenant le calcul de la consommation de ressource actuelle et future, du niveau de chargement de CPU, du niveau de chargement de disque, du niveau de chargement de réseau et du niveau de chargement de mémoire d'au moins une partie de ladite pluralité de noeuds de serveur par des moyens de surveillance placés dans chaque noeud de serveur correspondant et l'envoi desdits calculs à ladite entité centrale.

6. Procédé selon la revendication 3, comprenant, par ledit au moins un de ladite pluralité de noeuds de serveur, la décomposition de ladite demande de téléchargement reçue depuis ladite entité centrale dans un ensemble de tâches, ledit ensemble de tâches étant au moins une de la liste non fermée suivante : contrôle d'accès, assignation de disque, assignation de ressource de réseau, processus de téléchargement, assignation de ressource de CPU, traitement postérieur, et réplication de contenu audit dépositaire central.

7. Procédé selon la revendication 6, comprenant la définition dudit ensemble de tâches en fonction d'un Graphe Acyclique Orienté.

8. Procédé selon la revendication 7, comprenant l'acceptation, par ledit au moins un desdits noeuds de serveur, de ladite demande de téléchargement reçue depuis ladite entité centrale si des exigences de ressource associées audit ensemble de tâches peuvent être satisfaites par les ressources disponibles actuelles dans ledit au moins un desdits noeuds de serveur.

9. Système pour la mise en oeuvre d'un processus d'acquisition de contenu distribué pour un Réseau de Diffusion de Contenu, ledit Réseau de Diffusion de Contenu, ou CDN, comprenant une pluralité de noeuds de serveur, ledit processus d'acquisition de contenu étant mis en oeuvre lorsqu'un utilisateur final demande le téléchargement de contenu, comprenant un contrôleur central adapté pour :
- sélectionner, lors de la réception d'une demande de téléchargement depuis ledit utilisateur final, au moins un de ladite pluralité de noeuds de serveur en fonction du statut actuel de ladite pluralité de noeuds de serveur et/ou des exigences de CPU de ladite pluralité de noeuds de serveur ; et
- la direction par ladite entité centrale, de ladite demande de téléchargement dudit utilisateur final audit au moins un de ladite pluralité de noeuds de serveur ;
dans lequel ledit utilisateur final télécharge ledit contenu audit au moins un de ladite pluralité de noeuds de serveur sur acceptation de ladite demande de téléchargement par ledit au moins un de ladite pluralité de noeuds de serveur, **caractérisé en ce que** ledit contrôleur central est en outre adapté pour sélectionner ladite au moins une pluralité de noeuds de serveur en fonction de la localisation dudit utilisateur final.

10. Système selon la revendication 9, dans lequel chacun de ladite pluralité de noeuds de serveur comprend un moniteur de chargement de système qui calcule un niveau de chargement actuel et futur de ressources par rapport au noeud de serveur correspondant, et envoie lesdits calculs audit contrôleur central, lesdites ressources étant au moins une de la liste non fermée suivante : CPU, disque, réseau et mémoire.

11. Système selon la revendication 10, dans lequel chacun de ladite pluralité de noeuds de serveur comprend un gestionnaire d'admission de tâche adapté pour recevoir ladite demande de téléchargement depuis ledit contrôleur central et la décomposition de ladite demande de téléchargement dans un ensemble de tâches, ledit ensemble de tâches comprenant l'utilisation de ressources par rapport au noeud de serveur correspondant et lesdites tâches étant au moins une de la liste non fermée suivante : contrôle d'accès, assignation de disque, assignation de ressource de réseau, processus de téléchargement, assignation de ressource de CPU, traitement postérieur et réplication de contenu audit contrôleur central.

12. Système selon la revendication 11, dans lequel chacun de ladite pluralité de noeuds de serveur comprend un gestionnaire de ressource adapté pour vérifier que ledit ensemble de tâches peut être réalisé en fonction des ressources disponibles actuelles dans ledit au moins un desdits noeuds de serveur et l'acceptation de ladite demande de téléchargement après ladite vérification.

13. Système selon la revendication 12, dans lequel chacun de ladite pluralité de noeuds de serveur comprend une réserve de tâche dans laquelle ledit gestionnaire d'admission de tâche envoie ledit ensemble de tâches sur ladite acceptation de ladite demande de téléchargement.

14. Système selon la revendication 13, dans lequel chacun de ladite pluralité de noeuds de serveur comprend un planificateur de tâche adapté pour exécuter ledit ensemble de tâches depuis ladite réserve de tâche en fonction d'un Graphe Acyclique Orienté et d'horodatages associés audit ensemble de tâches.

15. Système selon la revendication 14, dans lequel chacune de ladite pluralité de noeuds de serveur comprend un dépositaire de tâche dans lequel toutes les tâches possibles sont définies, lesdites toutes les tâches possibles étant téléchargées depuis un dépositaire de tâche central dans ledit contrôleur central.

16. Système selon l'une quelconque des revendications précédentes 9 à 15, dans lequel ledit contrôleur central comprend une Interface de Planification d'Application de gestionnaire de contenu qui permet audit utilisateur final d'interagir avec ledit contrôleur central en fournissant un ensemble de fonctions.

17. Système selon la revendication 16, dans lequel ledit contrôleur central comprend un contrôleur de noeuds d'acquisition dans lequel ladite pluralité de noeuds de serveur envoie lesdits calculs, ledit noeud d'acquisition ayant au moins une partie des informations suivantes de chacun de ladite pluralité de noeuds de serveur : état actuel, prédiction de chargement futur, processus d'acquisition en cours et contenus acquis.

18. Système selon la revendication 17, dans lequel ledit contrôleur central comprend un gestionnaire de contenu adapté pour valider des droits d'accès dudit utilisateur final et la mise en oeuvre de ladite sélection dudit au moins un de ladite pluralité de noeuds de serveur en fonction des informations fournies par ledit contrôleur de noeud d'acquisition.

19. Système selon la revendication 18, dans lequel ledit contrôleur central comprend un contrôleur d'accès dans lequel lesdits droits d'accès, la capacité de stockage maximale et le nombre maximal de processus de téléchargement parallèles sont définis pour ledit utilisateur final et stockés dans une base de données d'utilisateur.

20. Système selon la revendication 19, dans lequel ledit contrôleur central comprend un contrôleur de dépositaire central dans lequel le contenu téléchargé dans chacun de ladite pluralité de noeuds de serveur est stocké.

21. Système selon l'une quelconque des revendications précédentes, dans lequel ledit processus d'acquisition de contenu distribué coexiste avec un processus de diffusion de contenu distribué dans ladite pluralité de noeuds de serveur.
